# EUROPEAN PATENT APPLICATION

(11) **EP 1 892 923 A1**
(43) Date of publication of application: **27.02.2008**
(21) Application number: 07114736.7
(22) Date of filing: 22.08.2007
(51) Int. Cl.: H04L 29/06, H04L 29/08, H04M 1/725, H04N 7/14

(54) **Method and apparatus for video telephony in mobile communication terminal**

(30) Priority: 24.08.2006 KR 20060080260
(71) Applicant: Samsung Electronics Co., Ltd., Suwon-si Gyeonggi-do (KR)
(72) Inventor: Choi, Woo-Young, Incheon (KR)
(74) Representative: Grünecker, Kinkeldey, Stockmair & Schwanhäusser Anwaltssozietät

(57) **Abstract**

Provided are a method and an apparatus for video telephony in a mobile communication terminal. According to the method, when a calling mobile communication terminal attempts video telephony, call connection between the calling mobile communication terminal and a called mobile communication terminal is made. The calling mobile communication terminal checks whether video telephony profile data of the called mobile communication terminal has been registered. When the video telephony profile data of the called mobile communication terminal has been registered, the calling mobile communication terminal selects the video telephony profile data and transmits the profile data to the called mobile communication terminal to form a video telephony channel.

## Description

### PRIORITY

This application claims priority under 35 U.S.C. § 119 to an application filed in the Korean Intellectual Property Office on August 24, 2006 and assigned Serial No. 2006-80260, the contents of which are incorporated herein by reference.

### BACKGROUND OF THE INVENTION

### 1. Field of the Invention

The present invention relates generally to a method and an apparatus for Video Telephony (VT) in a mobile communication terminal, and more particularly, to a method and an apparatus for supporting fast video telephony connection in a mobile communication terminal.

### 2. Description of the Related Art

As functions such as a color display, a large capacity memory, a digital camera, a wireless Internet platform, a multiplechord audio output, an MPEG Layer 3(MP3) function, and a Video On Demand (VOD) function are mounted in a mobile communication terminal, a variety of multimedia services, e.g., video telephony service, become possible. 2.5G and 3G wireless networks such as a Wideband Code Division Multiple Access (WCDMA) system and an Evolution Data Only (EVDO) system can provide video telephony service. The WCDMA and the EVDO systems have been proposed as a video telephony system for video telephony service.

In a video telephony system, both terminals exchange moving image streams with each other through a network, such as a packet switched network and a circuit switched network, during video telephony. An H.245 protocol is used in common for control of this data. Here, the H.245 protocol transmits and receives control messages in order to mediate a function and a channel between terminals. The H.245 protocol performs capability exchange, opening and closing of a logical channel, a mode request, a flow control, a general command. Instructions are performed through these control messages. Also, the control messages can be used to support master/slave determination, capability exchange of performance between both terminals, a logical channel signaling, a logical channel signaling in dual directions, a closed logical channel signaling mode request, and determination of delay.

Also, the H.245 protocol is responsible for negotiation regarding compatibility between terminals, and a Quality of Service (QoS) control. The QoS control includes a frame/bit rate control, an image size control, and a fast update request.

After this protocol exchange and a negotiation process, both terminals transmit a real image and real voice data in accordance with a predetermined data type to perform video telephony. Therefore, in the above-described video telephony system, video telephony is connected through an exchange of a variety of messages and protocols between a calling terminal and a called terminal. Exchange of many messages should be made, and a complicated process should be performed for actual video telephony connection. However, a commercial service requires not only that protocol is connected, but also that an image of a called party is displayed within several seconds.

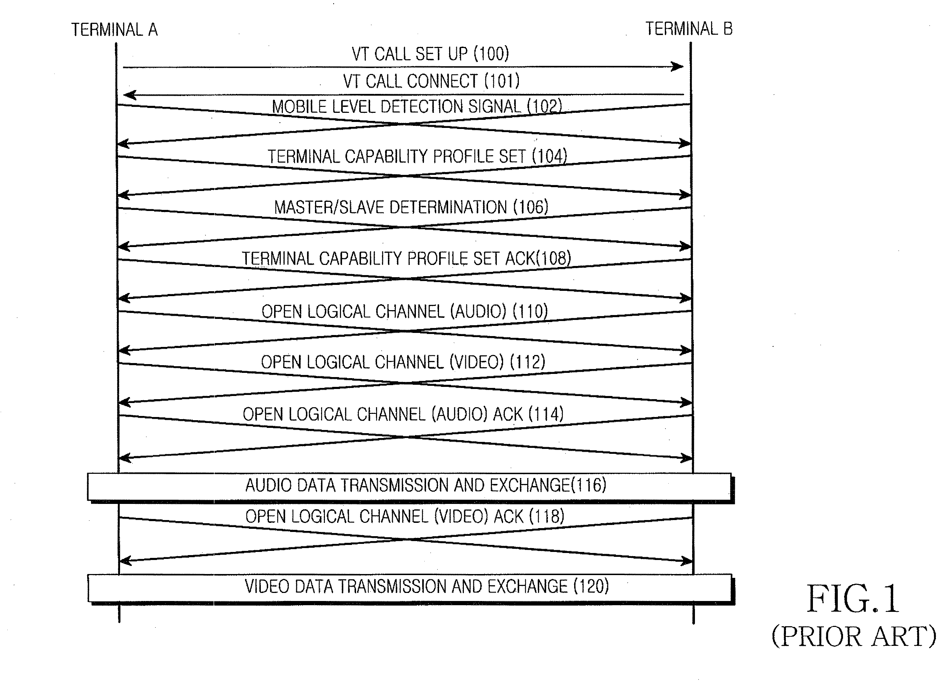

FIG. 1 is a flowchart illustrating a signaling procedure for video telephony according to a conventional art.

Referring to FIG. 1, when a calling mobile communication terminal tries a call in order to make video telephony, a set up is made using an H.223 protocol (100), and a call is connected (101). After a call set up is made, the calling mobile communication terminal exchanges control messages with a called mobile communication terminal in order to make negotiation between the calling mobile communication terminal and the called mobile communication terminal using an H.245 protocol. Examples of the control messages include a mobile level detection signal message (102), a terminal capability profile set (104) and a terminal capability profile set ACK (108) for exchange of codec data to be used for encoding and decoding image and voice data, a Master/Slave Determination message (106) for classifying a setting authority of a logical channel by designating a master and a slave of communication, an open logical channel (Audio) (110), an open logical channel (Video) (112), an open logical channel (Audio) ACK (114) and an open logical channel (Video) ACK (118) for generating a logical channel through which multimedia data are actually transmitted. Here, a logical channel for audio should be established in order to transmit audio data (116), and a logical channel for video should be established in order to transmit video data (120).

A conventional signaling procedure for video telephony connection is performed through a repetition of requests and acknowledgements between mobile communication terminals for making video telephony. In other words, a negotiation process for exchanging control messages including a Master/Slave Determination message, a terminal characteristic exchange message, a multiplexing data exchange message and a message of generating a logical channel for transmitting audio or video signals is complicated, and consumes much time, causing a video telephony connection time to be delayed.

Therefore, a method and an apparatus for providing fast video telephony connection by simplifying a signaling procedure of video telephony are required.

### SUMMARY OF THE INVENTION

An object of the present invention is to substantially solve at least the above problems and/or disadvantages and to provide at least the advantages below. Accordingly, an object of the present invention is to provide an apparatus and a method for performing video telephony at a mobile communication terminal.

Another object of the present invention is to provide a method and an apparatus for reducing a signaling procedure when video telephony is tried at a mobile communication terminal.

Further, another object of the present invention is to provide a method and an apparatus for performing signaling using vide telephony profile data when video telephony is tried at a mobile communication terminal.

According to one aspect of the present invention, a transmitting method for video telephony in a mobile communication terminal includes when a calling mobile communication terminal tries video telephony, performing call connection between the calling mobile communication terminal and a called mobile communication terminal; checking, at the calling mobile communication terminal, whether video telephony profile data of the called mobile communication terminal has been registered; and when the video telephony profile data of the called mobile communication terminal has been registered, selecting the video telephony profile data to transmit the video telephony profile data to the called mobile communication terminal.

According to another aspect of the present invention, a receiving method for video telephony in a mobile communication terminal includes; : after call connection between a calling mobile communication terminal and a called mobile communication terminal, receiving video telephony profile data from the calling mobile communication terminal; and upon checking that video telephony is possible with reference to the video telephony profile data received by the called mobile communication terminal, transmitting a response signal to the calling mobile communication terminal to form a video telephony channel.

According to further another aspect of the present invention, a calling apparatus for video telephony in a mobile communication terminal includes a Radio Frequency (RF) module for receiving signals required for call set up and call connection between a calling mobile communication terminal and a called mobile communication terminal, and providing the signals to a controller when the calling mobile communication terminal tries video telephony; and the controller for checking whether video telephony profile data of a called mobile communication terminal has been registered in a memory after the call connection, and when the video telephony profile data of the called mobile communication terminal has been registered, transmitting the video telephony profile data to the called mobile communication terminal via the RF module to form a video telephony channel.

According to yet another aspect of the present invention, a receiving apparatus for video telephony in a mobile communication terminal; includes an RF module for receiving signals required for call set up between a calling mobile communication terminal and a called mobile communication terminal, providing the signals to a controller, and receiving corresponding video telephony profile data from the calling mobile communication terminal when the calling mobile communication terminal tries video telephony; and the controller for transmitting a response signal to the calling mobile communication terminal via the RF module to form a video telephony channel upon checking that video telephony is possible with reference to the video telephony profile data received by the called mobile communication terminal.

### BRIEF DESCRIPTION OF THE DRAWINGS

The above and other objects, features, and advantages of the present invention will become more apparent from the following detailed description, when taken in conjunction with the accompanying drawings, in which:
FIG. 1 is a flowchart illustrating a signaling procedure for video telephony according to a conventional art;
FIG. 2 is a diagram illustrating a mobile communication network for video telephony according to the present invention;
FIG. 3 is a diagram illustrating a video telephony system between video telephony terminals having an H.324M protocol stack structure in a mobile communication network according to the present invention;
FIG. 4 is a flowchart of signaling using video telephony profile data for video telephony according to the present invention;
FIG. 5 is a flowchart of generating a call in video telephony using video telephony profile data according to the present invention;
FIG. 6 is a flowchart of receiving a call in video telephony using video telephony profile data according to the present invention;
FIG. 7 is a diagram illustrating a video telephony profile table according to the present invention;
FIG. 8 is a diagram illustrating an example of video telephony profile data stored in a mobile communication terminal according to the present invention; and
FIG. 9 is a block diagram illustrating an apparatus for video telephony in a mobile communication terminal according to the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail for the sake of clarity and conciseness.

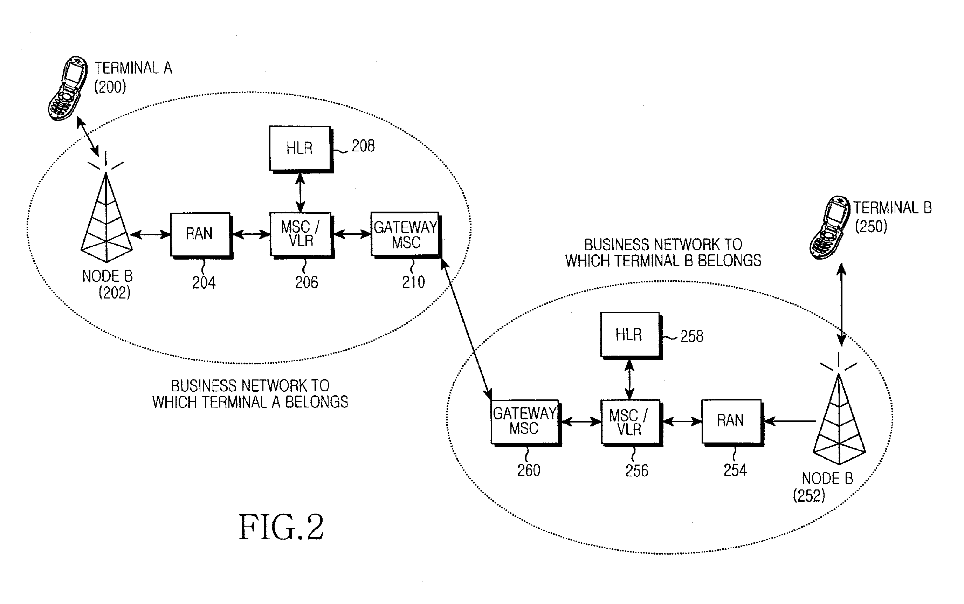

FIG. 2 is a diagram illustrating a mobile communication network for video telephony according to the present invention.

Referring to FIG. 2, a circuit switched mobile communication network includes nodes B (202 and 252) serving as base stations, Radio Access Networks (RAN) (204 and 254), which are base station subsystems of the nodes B, and Mobile-service Switching Centers (MSCs)/Visitor Location Registers (VLRs) (206 and 256) corresponding to core networks of a circuit switched domain, Home Location Register (HLRs) (208 and 258), and gateway MSCs (210 and 260). The MSC manages call control and mobility of a user's terminal. The VLR and the HLR provide functions of registering and managing data of the user's terminal.

When a mobile communication terminal 200 tries a call for video telephony, video telephony is performed according to an initial H.245 protocol through the node B 202, the RAN 204, and the MSC/VLR 206; and the MSC/VLR 256, the RAN 254, and the node B 252 to which a counterpart mobile communication terminal 250 is connected. After that, video telephony is performed at least once; using video telephony profile data. Here, connection between business networks is performed through gateway MSCs 210 and 260.

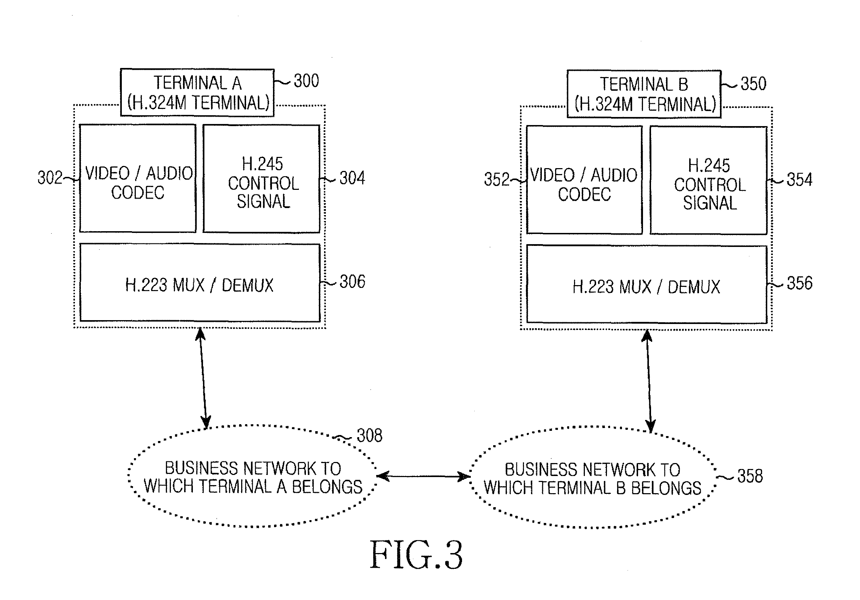

FIG. 3 is a diagram illustrating a video telephony system between video telephony terminals having an H.324M protocol stack structure in a mobile communication network according to the present invention.

Referring to FIG. 3, the H.324M protocol is a protocol proposed for a mobile communication environment. An H.324M system is not provided as one independent unit prescribing all regulations and methods regarding multimedia communication, but the H.324M system is designed to exchange data required for communication depending on a lower level protocol divided into a plurality of protocol stacks. That is, an H.324M-based video telephony terminal includes video/audio codec parts 302 and 352, an H.245 control signal parts 304 and 354, and H.223 mux/demux parts 306 and 356.

A video telephony system is responsible for controlling an overall video telephony operation of a terminal, handling call connection and call termination through a radio part, and handling transmission and reception of video and voice data through multiplexing and demultiplexing for the video and voice data.

H.245 protocols 304 and 354 inside an H.324M stack transmit and receive control messages in order to mediate performance and a channel between terminals. These control messages perform capability exchange, opening and closing of logical channels, a mode request, a flow control, a command, and an instruction. Also, these control messages can be used to support master/slave determination, capability exchange for performance between both terminals, logical channel signaling, both direction logistical channel signaling, a closed logistical channel signaling mode request, determination for delay. Also, the H.245 is responsible for control commands such as requests for storing video content, and user security key transmission of a transmission party proposed by the present invention.

Particularly, the present invention generates data used for exchange and negotiation steps of various protocol messages of an H.245 protocol operating for initial connection of a video telephony protocol, as a profile message which is one data unit, and provides the profile message to try connection to a counterpart terminal, so that a time taken for connecting video telephony can be reduced.

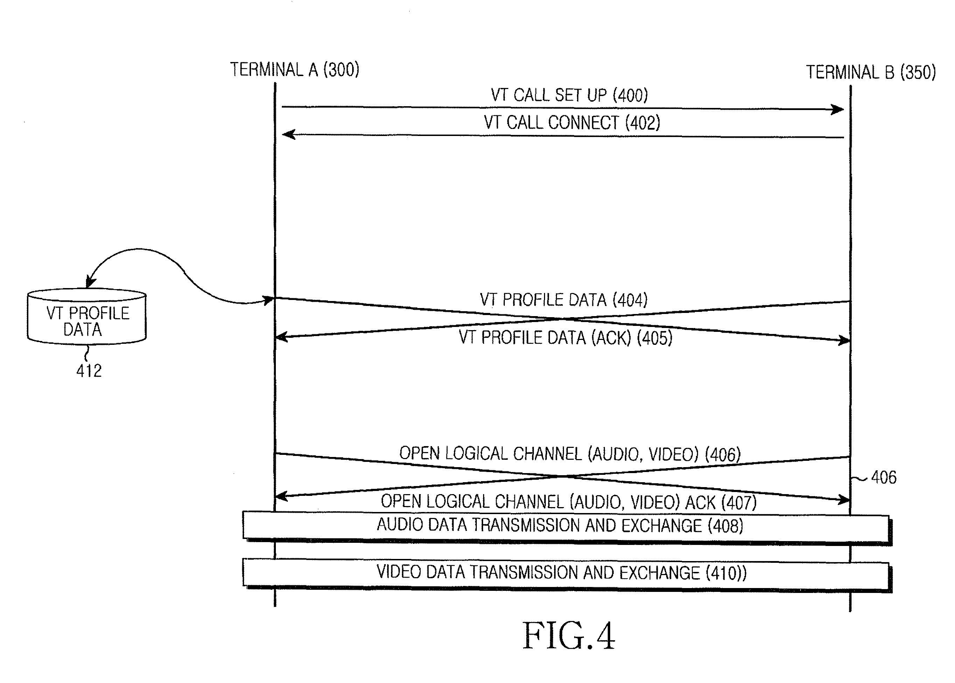

FIG. 4 is a flowchart of signaling using video telephony profile data for video telephony according to the present invention.

Referring to FIG. 4, when a mobile communication terminal A 300 transmits a call set up message 400 to a mobile communication terminal B 350 in order to make video telephony, the mobile communication terminal B 350 transmits a call connect message 402 to the mobile communication terminal A 300 to complete call connection. After call connection is completed, when a video telephony profile of the mobile communication terminal B 350 is stored in an internal storage medium 412 of the mobile communication terminal A 300, the mobile communication terminal A 300 transmits corresponding video telephony profile data 404 to the mobile communication terminal B 350. The mobile communication terminal B 350 receives the video telephony profile data 404, checks whether the video telephony profile data 404 is valid, and transmits Acknowledgement (ACK) video telephony profile data 405 to the mobile communication terminal A 300.

The mobile communication terminal A 300 and the mobile communication terminal B 350 generates data regarding codec and a logical channel from video telephony profile data of a counterpart. The mobile communication terminal A 300 generates logical channels of audio and video 406, and the mobile communication terminal B 350 transmits a corresponding ACK message 407 on the basis of the data regarding the codec and logical channel. When the logical channel is established, transmission and exchange of video data 410 and transmission and exchange of audio data 408 are performed.

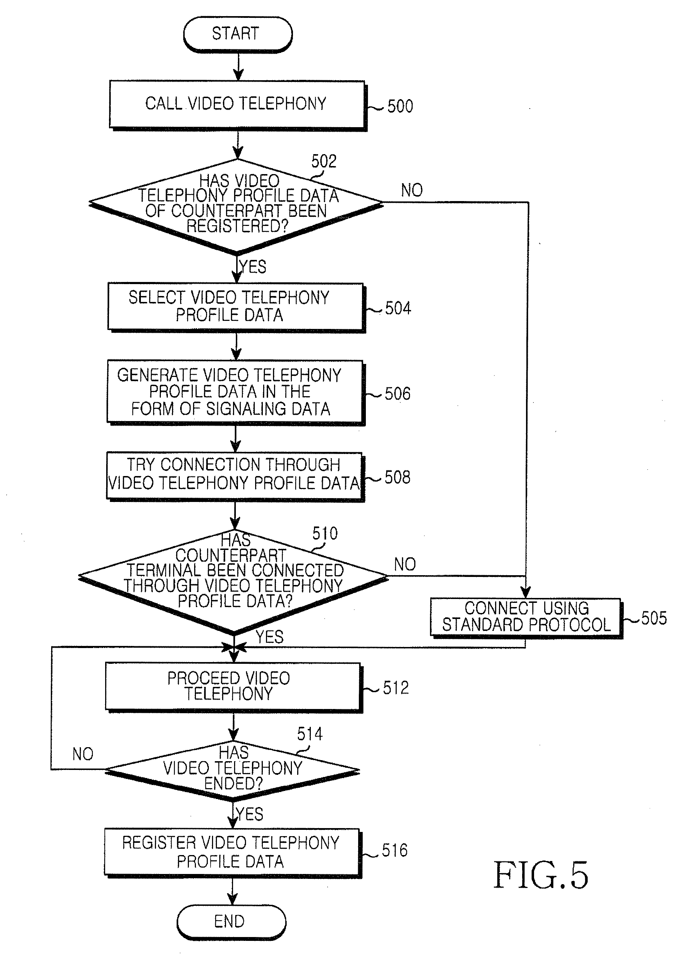

FIG. 5 is a flowchart of generating a call in video telephony using video telephony profile data according to the present invention.

Referring to FIG. 5, video telephony connection starts after call set up for video telephony in order to make video telephony in step 500. After that, whether video telephony profile data of a counterpart has been registered is checked in step 502. The video telephony profile is stored in an internal storage medium of the mobile communication terminal. A storage medium for the video telephony profile also can exist as an independent database.

When the video telephony profile data of the counterpart has not been registered in step 502, step 505 is performed to make video telephony connection according to an H.245 protocol, and step 512 is performed to proceed with video telephony.

However, when the video telephony profile data of the counterpart has been registered in step 502, step 504 is performed to select the corresponding video telephony profile data.

After that, step 506 is performed to generate video telephony profile data as signaling data, i.e., video telephony profile data is read from the storage medium and formed as a Packet Data Unit (PDU).

After that, step 508 is performed to transmit the video telephony profile message to a counterpart terminal and try to connect through profile data.

After that, when the counterpart terminal approves the connection through the profile message (data) in step 510, video telephony starts in step 512.

When the video telephony ends in step 514, step 516 is performed to update video telephony profile data of the counterpart (e.g. the called mobile communication terminal).

When the video telephony has not ended in step 514, step 512 is performed.

After that, a transmission procedure of the present invention ends.

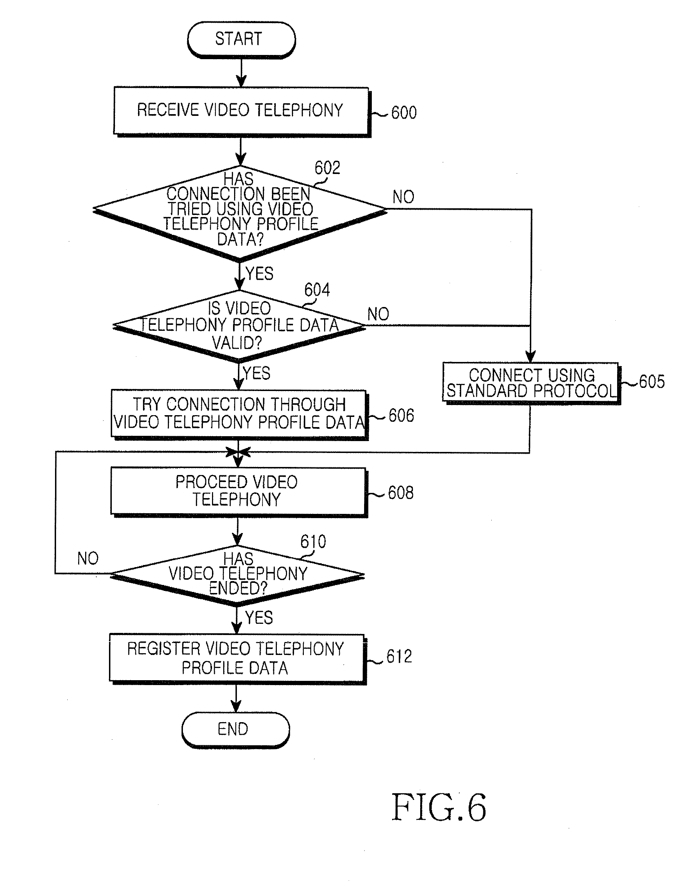

FIG. 6 is a flowchart of receiving a call in video telephony using video telephony profile data according to the present invention.

Referring to FIG. 6, when a call set up for video telephony is requested from a calling mobile communication terminal, a video telephony request is accepted in step 600, so that the call set up between the calling mobile communication terminal and a called mobile communication terminal is established.

After that, step 602 is performed to check whether connection is video telephony connection through video telephony profile data. That is, it is judged that whether the calling mobile communication terminal intends to make video telephony using video telephony profile data or make video telephony using an H.245 protocol.

After that, when the connection is the video telephony connection using a profile message and the profile message is used, it is checked that a profile received from the calling mobile communication terminal is valid in step 604.

When the received profile is not valid in step 604, an H.245 protocol is used in step 605.

Otherwise when the received profile is valid in step 604, the video telephony connection is tried through the corresponding video telephony profile data message in step 606.

After that, video telephony starts in step 608.

When the video telephony has not ended in step 610, step 608 is performed.

When the video telephony ends in step 612, profile data of a counterpart mobile communication terminal(e.g. the calling mobile communication terminal) is stored in a storage medium.

After that, the reception procedure of the present invention ends.

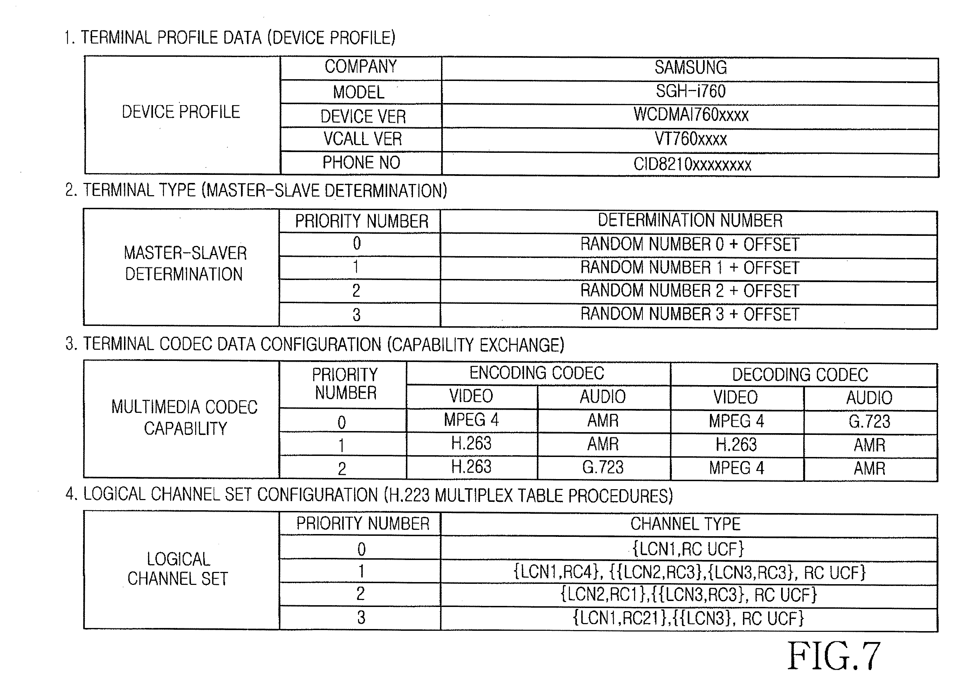

FIG. 7 is a diagram illustrating a video telephony profile table according to the present invention.

Referring to FIG. 7, the video telephony profile table is divided into a device profile table, master/slave determination table, a multimedia codec capability table, and a logical channel set table.

The device profile table contains a company name, a model name, a device version, a video telephone version, and a phone number. Also, the master/slave determination table contains priority numbers and random numbers.

Data contained in the multimedia codec capability table and the logical channel set table has the following structure. The data has priority, and a mobile communication terminal selects data of a codec and a logical channel desired by a terminal of a reception party using this priority to make video telephony. In other words, when priority is zero in the multimedia codec capability table, an MPEG 4 is used as a video encoding codec, an Adaptive Multi-Rate (AMR) is used as an audio encoding codec, an MPEG 4 is used as a video decoding codec, and G.723 is used as an audio decoding codec.

An element contains two data parts: {LCN#, RC#/RC UCF} in the logical channel set table. The first part LCN#(Logical Channel Number) specifies the information source; the second part RC#/RC UCF(RC means Repeat Count and UCF means Until Closing Flag) indicates the data slot length. For example, When priority is zero in the logical channel set table, all audio data are conveyed on a logical channel 1. When priority is 1 in the logical channel set table, 4 blocks of audio data are conveyed on a logical channel 1, 3 blocks of video data are conveyed on a logical channel 2, 3 blocks of signaling data are conveyed on a logical channel 3, and the rest signaling or video blocks are conveyed on a logical channel 2 and 3. In other words, the logical channel set table contains data regarding how video, audio, and signaling data are combined within a logical channel.

According to the conventional art, a processing portion of negotiating codec data and a logical channel takes a longest time. To the contrary, the present invention can reduce the processing time of this portion by preparing previous video telephony negotiation results in the form of a profile.

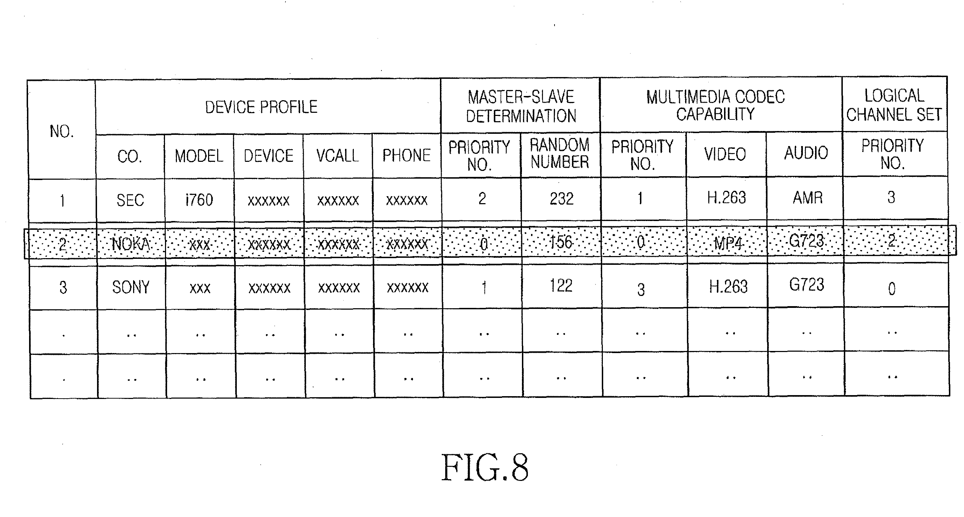

FIG. 8 is a diagram illustrating an example of video telephony profile data stored in a mobile communication terminal according to the present invention.

Referring to FIG. 8, the video telephony profile data includes a device profile of a counterpart terminal, arbitrary numeral data for master/slave determination, multimedia codec capability data, and logical channel set data. When connection to a corresponding terminal is attempted again, a profile message is generated using this data.

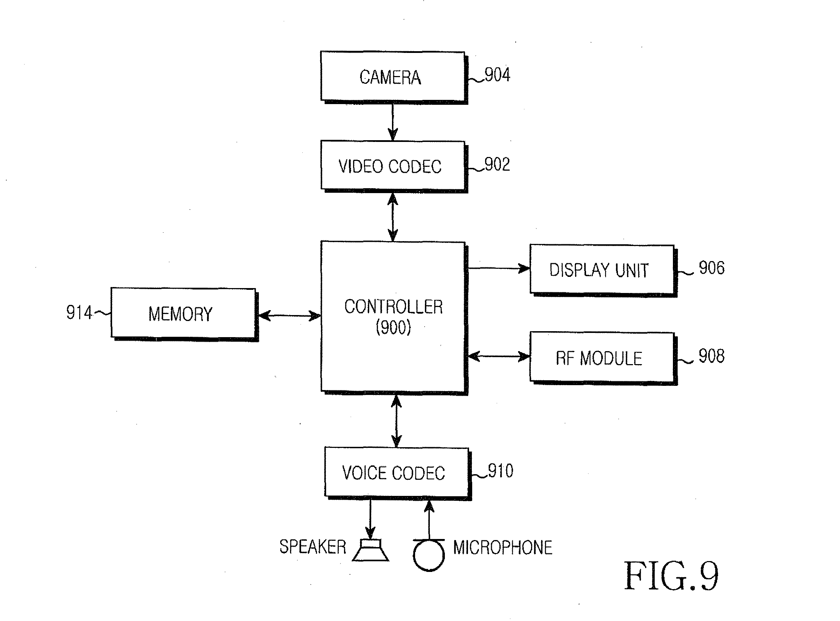

FIG. 9 is a block diagram illustrating an apparatus for video telephony in a mobile communication terminal according to the present invention.

Referring to FIG. 9, a controller 900 controls an operation of the mobile communication terminal on the whole. For example, the controller 900 performs a processing and a control for voice communication and data communication. In addition to general functions, the controller 900 checks whether video telephony profile data of a called mobile communication terminal has been registered in a memory 914 after call set up for video telephony. When the video telephony profile data of the called mobile communication terminal has been registered, the controller 900 transmits the corresponding video telephony profile data to the called mobile communication terminal via an RF module 908.

Also, upon checking that video telephony is possible with reference to the video telephony profile data received by the called mobile communication terminal, the controller 900 transmits a response signal to a calling mobile communication terminal via the RF module 908 to form a video telephony channel.

A voice codec 910 converts Pulse Code Modulation (PCM) data provided from the controller 900 into analog voice signals to output the voice signals via a speaker, and converts voice signals received via a microphone into PCM data to provide the PCM data to the controller 900.

The memory 914 stores micro codes of a program processing and controlling operations of the controller 900, and a variety of reference data. Particularly, in addition to general functions, the memory 914 stores video telephony profile data and provides the profile data according to instruction of the controller 900.

An image codec 902 decodes image signals provided by a camera 904 and provide the image signals to the controller 900.

The camera 904 includes a camera sensor for converting an optical signal detected when an image is photographed into an electrical signal, and a signal processor for converting analog image signals provided from the camera sensor into digital data. Here, the camera sensor can be a Charged Coupled Device (CCD), and the signal processor can be a Digital Signal Processor (DSP). The signal processor can be realized using image-processing devices other than the DSP.

A display unit 906 displays status data (or indicator) occurring while the mobile communication terminal operates, limited numbers and characters, moving pictures, and still pictures. The display unit 906 can be a color liquid crystal display.

The RF module 908 down-converts RF signals received via an antenna or up-converts baseband signals to transmit the up-converted signals via the antenna. Here, the RF module 908 receives signals required for call set up and call establishment between a calling mobile communication terminal and a called mobile communication terminal, and provides the signals to the controller 900 when the calling mobile communication terminal tries video telephony.

According to a conventional art, a slow video telephony connection time is generated, because a video telephony system requires a repeated and complicated process of requests and acknowledgements between mobile terminals. However, the present invention provides a fast video telephony connection time by providing simple and accurate video telephony profile data using video telephony profile data.

Exemplary embodiments of the present invention can also comprise computer readable codes on a computer readable medium. The computer readable medium can comprise any data storage device that can store data that can be read by a computer system. Examples of a computer readable medium include magnetic storage media (such as, ROM, floppy disks, hard disks, among others), optical recording media (such as, CD-ROMs, or DVDs), and storage mechanisms such as carrier waves (such as, transmission through the Internet). The computer readable medium can also be distributed over network coupled computer systems so that the computer readable code is stored and executed in a distributed fashion. Also, functional programs, codes, and code segments for accomplishing exemplary embodiments of the present invention can be construed by programmers of ordinary skill in the art to which the present invention pertains.

While the invention has been shown and described with reference to certain preferred embodiments thereof, it will be understood by those skilled in the art that various changes in form and details may be made therein without departing from the spirit and scope of the invention as defined by the appended claims.

## Claims

1. A transmitting method for video telephony in a mobile communication terminal, the method comprising the steps of:
performing call connection between a calling mobile communication terminal and a called mobile communication terminal;
checking whether the calling mobile communication terminal has video telephony profile data of the called mobile communication terminal; and
transmitting the video telephony profile data to the called mobile communication terminal to establish a video telephony channel.

2. The method of claim 1, further comprising, storing the video telephony profile data for the called mobile communication terminal.

3. The method of claim 1, further comprising, if the calling mobile communication terminal dose not have the video telephony profile data of the called mobile communication terminal, establishing a video telephony channel through a predetermined procedure.

4. The method of claim 1, wherein the video telephony profile data that has been used during the latest successful video telephony call with the called mobile communication terminal comprises at least two of a device profile containing general data for a device, master/slave determination data for designating a subject and an object of video telephony, data for multimedia codec capability, and data for logical channel set configuration.

5. A receiving method for video telephony in a mobile communication terminal, the method comprising the steps of:
receiving video telephony profile data from a calling mobile communication terminal; and
upon checking that video telephony is possible with reference to the video telephony profile data received by a called mobile communication terminal, transmitting a response signal to the calling mobile communication terminal to form a video telephony channel.

6. The method of claim 5, further comprising, storing the video telephony profile data for the calling mobile communication terminal.

7. The method of claim 5, further comprising, upon checking that video telephony is not possible with reference to the received video telephony profile data, establishing a video telephony channel through a predetermined procedure.

8. A calling apparatus for video telephony in a mobile communication terminal, the apparatus comprising:
an RF (radio frequency) module for receiving signals required for call set up and call connection and providing the signals to a controller; and
the controller for checking whether video telephony profile data of a called mobile communication terminal exist in a memory, transmitting the video telephony profile data to the called mobile communication terminal via the RF module to form a video telephony channel.

9. The apparatus of claim 8, wherein the controller stores the profile data in the memory.

10. The apparatus of claim 8, wherein the controller establishes a video telephony channel through a predetermined procedure if the calling mobile communication terminal does not have the video telephony profile data of the called mobile communication terminal.

11. The apparatus of claim 8, wherein the video telephony profile data that has been used during the latest successful video telephony call with the called mobile communication terminal comprises at least two of a device profile containing general data for a device, master/slave determination data for designating a subject and an object of video telephony, data for multimedia codec capability, and data for logical channel set configuration.

12. A receiving apparatus for video telephony in a mobile communication terminal, the apparatus comprising:
an RF module for receiving signals required for call set up between a calling mobile communication terminal and a called mobile communication terminal, providing the signals to a controller, and receiving corresponding video telephony profile data from a calling mobile communication terminal; and
the controller for transmitting a response signal to the calling mobile communication terminal via the RF module to establish a video telephony channel when it is checked that video telephony is possible with reference to the video telephony profile data received by the called mobile communication terminal.

13. The apparatus of claim 12, wherein the controller stores the profile data in the memory when the video telephony is ended.

14. The apparatus of claim 12, wherein upon checking that video telephony is not possible with reference to the received video telephony profile data, a video telephony channel is established through a predetermined procedure.

15. A computer-readable recording medium having recorded thereon a program for video telephony in a mobile communication terminal, comprising:
a first code segment, for performing call connection between a calling mobile communication terminal and a called mobile communication terminal; and
a second code segment, for checking whether video telephony profile data of a called mobile communication terminal has been registered, and when the video telephony profile data of the called mobile communication terminal has been registered; and
a third code segment, for transmitting the video telephony profile data to the called mobile communication terminal to form a video telephony channel.

16. A computer-readable recording medium having recorded thereon a program for video telephony in a mobile communication terminal, comprising:
a first code segment, for receiving video telephony profile data from a calling mobile communication terminal; and
a second code segment, upon checking that video telephony is possible with reference to the video telephony profile data received by a called mobile communication terminal, for transmitting a response signal to the calling mobile communication terminal to form a video telephony channel.

17. A mobile communication terminal for video telephony comprising:
means for performing call connection between a calling mobile communication terminal and a called mobile communication terminal;
means for checking whether video telephony profile data of the called mobile communication terminal has been registered, and
means for transmitting the video telephony profile data to the called mobile communication terminal to form a video telephony channel.

18. A mobile communication terminal for video telephony comprising:
means for receiving video telephony profile data from a calling mobile communication terminal; and
means for transmitting a response signal to the calling mobile communication terminal to form a video telephony channel upon checking that video telephony is possible with reference to the video telephony profile data received by a called mobile communication terminal.
